(19) Europäisches Patentamt / European Patent Office / Office européen des brevets

(11) **EP 3 482 972 A1**

(12) **EUROPEAN PATENT APPLICATION**
published in accordance with Art. 153(4) EPC

(43) Date of publication:
**15.05.2019 Bulletin 2019/20**

(51) Int Cl.:
*B60B 9/26* (2006.01)    *B60B 1/02* (2006.01)
*B60C 7/10* (2006.01)    *B60C 7/12* (2006.01)
*B60C 7/18* (2006.01)

(21) Application number: **17823702.0**

(22) Date of filing: **05.07.2017**

(86) International application number:
**PCT/ES2017/000083**

(87) International publication number:
**WO 2018/007658 (11.01.2018 Gazette 2018/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.07.2016 ES 201600553
04.10.2016 ES 201600817
21.03.2017 ES 201700230**

(71) Applicant: **Advantaria, SL
28760 Tres Cantos, Madrid (ES)**

(72) Inventors:
• **REQUENA RODRIGUEZ, Ignacio
28760 Tres Cantos (Madrid) (ES)**
• **PEREZ VENTURA, Juan Manuel
28770 Colmenar Viejo (Madrid) (ES)**

(54) **MIXED PNEUMATIC AIRLESS TYRE WITH INCREASED SAFETY**

(57) Mixed pneumatic and airless wheel with increased safety, incorporating a flexible, substantially inextensible external annular band (1) which comes into contact with the ground. This band is joined, on its inside section, to separated radial elements (2) which are fixed, in a part intermediate to a rim (6), to an elastic wall surrounding a sealtight compartment (7), enclosing a gas or liquid under pressure. This innovation eliminates vertical roll, rebound effect on the wheel, phase and vibration frequency differences between radial elements and between the pneumatic and airless parts (all of which occur in current mixed wheels at high speeds), thus reducing wheel deformation and fuel consumption. The innovation maintains the advantages of less deformation on bends, better performance with water on the road, and safety in the event of pressure loss.

FIG. 5

## Description

## Scope of the Invention

The invention falls within the field of wheels and tyres, for all types of vehicles, with or without an engine, and in particular within the field of improvements and innovations designed to increase vehicle safety and improve vehicle control.

## State of the Art

Historically, wheels for different types of vehicles have been divided into pneumatic and airless.

Pneumatic wheels have greater capacity to absorb vibrations produced by rolling, which increases comfort for the occupants of the vehicle and reduces strain on the damping systems. Airless wheels, on the other hand, have the advantage of not being exposed to problems derived from a puncture or a sudden loss of pressure inside them, but are inadvisable in vehicles at high speeds, given their lower capacity to absorb vibrations.

This division between pneumatic and airless wheels, with their marked differences in performance and behaviour, has led to the use of wheels of either one type or the other, depending on the final application and the speed the vehicle is to travel at.

There have been some specific efforts to develop designs that combine the benefits of both types of wheel, such as patent application US2012/0038207 developed by Timothy L. Williams and others, which is assigned to Boeing. This document describes a wheel with several concentric elastic layers connected to alternating elastic spokes, which can optionally surround a pneumatic chamber or volume in the contact zone with the rim. The main aim of this disclosure is to provide a wheel for use in military vehicles that has a minimum lateral surface area when receiving the impact of projectiles or the blast wave of an explosion, and that also has effective structural strength in the event of damage, including redundancy of elements in order to maintain the effective functioning of the wheel even if some spokes or portions of the intermediate layers become detached.

Commonly relevant aspects of civilian vehicles such as fuel consumption, occupant comfort or reduction of strain on damping systems, which are sacrificed by virtue of the objectives detailed above, are not considered to be priorities in the design requirements of this disclosure.

It should be noted that the use of several concentric structures in the outer ring of the wheel, with deformable elastic elements in the direction of the radius, may cause the appearance of resonance and phase decoupling phenomena between the radial elements of the different layers, which vibrate in the zone of contact of the wheel with the ground. These phenomena produce a distortion of the roundness of the outer contour of the wheel in the area that is not in contact with the ground, affecting its proper functioning, generating greater resistance to rotation and producing an initial phenomenon of vertical roll of the vehicle's axle due to this loss of roundness.

It is also observed that this distortion of the roundness of the contour that is not in contact with the ground increases due to the greater resistance to rotation, therefore meaning higher fuel consumption compared to a wheel that does not have this deformation.

Furthermore, the use of elastomer radial elements means the combination of the vehicle's weight and the impacts caused by uneven ground cause elastic deformation of the radial elements subjected to these stresses. This elastic deformation does not occur instantaneously, but rather is associated with vibrations generated at the moment of impact that gradually attenuate until they disappear after a certain period of time. This rate of attenuation of vibrations in the radial element depends on the nature and geometry of the material and is independent of the rotation speed of the wheel. As this rotation speed increases, the period between the reception of a first impact by a radial element within the deformation zone in contact with the ground and the reception of a second impact by this same element when it has not yet left this zone decreases. Whenever the period of time between the reception of these stresses in a radial element is less than the attenuation period of the vibrations caused by the first stress in this element, a decompensation is generated in the absorption of the vibrations, generating a decoupling between the vibration frequencies of the pneumatic part and the airless part. This decompensation causes an oscillation in vertical direction, which generates roll with vertical displacement of the outer contour of the pneumatic compartment and a rebound effect on the entire wheel. Both effects are transmitted to the axle of the vehicle, increasing the strain on the damping systems and decreasing the level of comfort for occupants.

The period of time between consecutive stresses being received on a single radial element located within the wheel deformation zone decreases proportionally to the angular speed of the wheel, i.e. it is inversely proportional to the linear speed of the vehicle. This phenomenon of decoupling, vertical oscillation and rebound effect therefore increases at higher speeds.

It has been observed that these phenomena are relevant in some vehicles for speeds above 50 km/h, becoming much more pronounced for speeds above 80 km/h.

For this reason, the company ADVANTARIA SL has completed a series of developments through the independent design of mixed wheels in order to maintain the advantages of this type of wheels, seeking to eliminate the disadvantages existing in the state of the art in terms of their use at high speeds.

In summary, it can be concluded that there are two distinct problems in the state of the art:

- At high speeds, the divulged mixed wheels display a vertical roll effect and there is a rebound effect on the entire wheel, reducing occupant comfort and increasing the strain on the vehicle's damping systems.

- At high speeds, the divulged mixed wheels display a deformation effect on the contour of the wheel, which loses its circular shape in the zone that is not in contact with the ground. This deformation presents greater resistance to rotation, increasing fuel consumption.

**Description of the Invention**

The design of the invention seeks to develop a mixed wheel that maintains the advantages of existing airless or mixed wheels (disappearance of problem of bursting or puncture, better performance in the event of road surface water, less deformation on bends, and longer working life of the wheel), eliminating the disadvantages in the state of the art as mentioned above.

This document seeks to develop a mixed wheel that is viable at high speeds. In the wheel of the invention, vertical roll effect is eliminated, there is no rebound effect, and the general roundness of the wheel contour is maintained at any vehicle operation speed, allowing adequate absorption of the vibrations produced by rotation on the ground. The aim is therefore to solve the two objective technical problems:

- Firstly, to create a mixed wheel with pneumatic and airless components, maintaining all the advantages of this type of wheel, which can be viably used in vehicles at high speeds.

- Secondly, to create a mixed wheel with pneumatic and airless components, maintaining all the advantages of this type of wheel while generating less resistance to rotation, therefore reducing fuel consumption.

In order to achieve these objectives, different aspects relating to the rigid or elastic behaviour of the different materials and constituent elements of the wheel are considered, along with modifications in their design, layout and geometry.

The wheel design developed in this invention includes a flexible, substantially inextensible external annular band, the outer part of which has a tread designed to come into contact with the ground in rolling conditions, while the inner part has a surface joined to several radial elements.

These radial elements, which occupy a zone interior to the external annular band, are attached to an elastic surface in the zone closest to the axle of the wheel. This elastic surface is in contact with the sides of a rim or rigid structure for anchoring to the vehicle's axle, forming an elastic wall that, together with the rim, envelops a volume that forms a closed compartment in which a gas or liquid is introduced at pressure higher than atmospheric pressure. Gas or liquid under pressure may be introduced directly inside the closed compartment if it is designed to be sealtight, otherwise it should be done through an air chamber (or with a liquid or other gas under pressure). For the sake of simplicity, the term "sealtight compartment" is used hereinafter to refer to a closed volume containing a gas or liquid under pressure, regardless of whether or not an inner chamber is used.

These simple or complex radial elements are arranged, on one end, in points or series of points distributed uniformly around the external annular band, and, on the other end, in points or series of points distributed uniformly around the elastic wall. The axis of each radial element, whether simple or complex, is directed in the same direction as the radius, or in a direction that maintains a reduced angle with respect to this radius (typically less than 10°).

There are two configurations in terms of the degree of compression of the radial elements and their relationship with the variation of the volume of the sealtight compartment, to be chosen in accordance with whether the aim is to eliminate only the problems of loss of roundness of the wheel contour and the initial phenomenon of vertical oscillation, as resulting from the appearance of phenomena of resonance and phase difference between radial elements of different rings, or is to further improve the degree of roundness of the wheel and also eliminate the phenomena of vertical oscillation and wheel rebound produced by the decoupling between the vibration frequencies of the pneumatic and airless parts.

To eliminate the phenomena of resonance and phase difference between nearby radial elements, it would be sufficient to use a single annular structure of radial elements, made of elastic materials, or of inextensible materials that allow transverse elastic buckling deformation, and to appropriately select, on an experimental basis, the operating pressure of the sealtight compartment and the elasticity of the radial elements; this would mean that the quotient between, firstly, the variation of the outer radius of the wheel and this unchanged outer radius, and, secondly, the quotient resulting from dividing the variation of the radius of the elastic wall by the value of this unchanged radius, are similar. For the purposes of this application, the two quotients are considered similar if they do not differ by more than 20%.

Furthermore, if the aim is, in a generally preferable situation, to increase the roundness of the contour and also eliminate the problem of vertical roll and rebound effect of the wheel caused by the decoupling between the vibration frequencies of the pneumatic and airless parts, it is necessary to ensure that the deformation of the external annular band and the sealtight wall is limited to the smallest space possible. In other words, the aim is for both deformations to be located within a solid angle formed by the axis of rotation and the limits of the tread's contact zone with the ground.

In this regard, it must be remembered that the pressure distribution inside the volume of the sealtight compartment is governed by Pascal's law, which allows a uniform redistribution of any pressure variation caused by a displacement of the outer elastic wall at this volume. In contrast, performance of the radial elements in the event of deformation is governed by Hooke's formula if they are made of elastomer material, or by Euler's theory in the case of inextensible elements that allow transverse buckling deformation. In both cases, the radial elements develop a resistance to deformation in the direction of the radius, generating a stress in the same direction.

Reducing the deformed area therefore requires radial elements that have a resistance to deformation which is much higher than the resistance to deformation of the volume of the pressure-tight compartment, meaning these elements transmit practically all the stress from the tread to the sealtight compartment, producing deformation only in the affected area of the elastic wall that surrounds this volume. This deformed zone is dynamically rebalanced during wheel rotation, due the effect of Pascal's law on the pressurised liquid or gas in the compartment.

In order to ensure that the radial elements have a higher deformation resistance than the pressurised sealtight compartment, it is necessary to use either rigid radial elements or semi-rigid radial elements with a minimum elastic or buckling limit in which the product of the maximum allowable pressure without deformation in the direction of the axis multiplied by the area of smallest transverse section of the radial element is greater than the product of the pressure of the sealtight volume multiplied by the total area of contact between the elastic wall and this radial element.

This relationship is expressed through the formula:

$$P_{Maximum} \times A_{Trans\ min} > P_{SC} \times A_{EW\text{-}RE}$$

where

> $P_{Maximum}$ - Maximum pressure permitted by the radial element in the direction of its axis without deformation.
> $A_{Trans\ min}$ - Smallest transverse section area of the radial element
> $P_{SC}$ - Operating pressure of the sealtight compartment.
> $A_{EW\text{-}RE}$ - Contact area between the elastic wall and the radial element.

In this equation, the maximum permissible pressure in a radial element $P_{Maximum}$ is determined experimentally, selecting the transverse area of this radial element according to the design requirements and the required operating pressure for the sealtight compartment $P_{SC}$.

Given this higher resistance to deformation of the radial elements compared to the sealtight compartment, the term "rigid radial element" shall refer indistinctly to radial elements of a rigid nature and to radial elements of a semi-rigid nature with a high resistance to deformation, only differentiating explicitly between them when describing a preferred embodiment.

The elastic wall, on the other hand, requires much higher deformation capacity in the direction of the radius than in directions perpendicular to it. Hence, if a radial rigid element is at an acute angle to the tread in its contact zone with the ground, the moment produced by the stress transmitted on the end of this rigid radial element necessarily results in the displacement of this element toward the sealtight compartment, rather than in a displacement around the contour of the elastic wall. This elastic and substantially inextensible character of the elastic wall contour can be achieved by including a reinforcement structure of metallic threads or fibres which are substantially inextensible, or by using elastomer material of sufficient thickness in the manufacture of this wall.

This design ensures that all wheel deformation occurs within a given solid angle, which is equal to or slightly greater (up to 10°) than the solid angle defined by the two planes which pass through the axis of rotation, and which each contain the boundary points of the two edges of the tread contact zone with the ground.

The wheel in the invention is designed so there are two or more radial elements in any solid angle of equal size to the solid angle of deformation.

The fact that there are at least two rigid radial elements within each solid angle of the size of the solid angle of deformation means that the wheel is supported in any turning position, either on a rigid radial element, if this is close to the vertical of the axis, or simultaneously on two rigid radial elements, if they are far from this vertical. This ensures that the wheel has adequate support at all times, and that the stress is transmitted from the contact surface in the direction of the radius that coincides with the axis of a radial element located within this solid angle of deformation.

The solid angle of deformation depends on each wheel and is calculated according to the rigidity conditions of the external annular band, the degree of flexibility of the elastic wall, the dimensions of the wheel (radius, width and proportion between pneumatic and airless parts), and the weight of the vehicle and the operating pressure of the sealtight compartment.

Both the external annular band and the elastic wall surrounding the sealtight compartment must, as indicated above, be substantially inextensible in nature in order to prevent strain due to the normal force of the ground and transmitted by the external annular band to the rigid radial elements (if at an oblique direction to them) from producing a rotary movement of these rigid radial elements with respect to the direction of the radius. Furthermore, the section of the radial elements can also be increased in their zones of contact with the external annular band and the elastic wall. This larger surface area has higher torsional strength in these contact zones, and avoids the possibility of this rotation with respect to radial direction.

Including a structural reinforcement layer on the inside of the external annular band and another structural reinforcement layer on the inside of the elastic wall may increase resistance to deformation in radial direction and decrease the size of the solid angle of deformation, and may therefore, depending on the characteristics of the vehicle, be desirable.

The use of radial elements with high resistance to deformation and the capacity to move in the direction of the radius in conjunction with the tread eliminates the possibility of independent oscillation in the airless part, and also removes the possibility of uncoupling between the vibration frequencies of the pneumatic and airless parts. The only possibility of oscillation is therefore in the elastic wall which covers the sealtight compartment volume. It should be noted that the use of sufficiently rigid radial elements in the zone between the external annular band and the elastic wall (which is a strip that is subject to successive deformations as the wheel rotates) does not affect the circular rolling movement (due to being dynamically circumscribed to the inside of the solid angle of deformation), absorbing the vertical displacements of the radial elements in the pneumatic part. As mentioned above, the elastic wall alternately modifies its deformation zone during wheel rotation, recovering its natural position in those zones that successively remain outside the solid angle of deformation. The action of the inner pressure in the sealtight compartment causes the pressure differences produced by the successive displacements of the elastic wall to be redistributed throughout the compartment, allowing its circular contour to be recovered in the zones where the stress of the rigid radial elements disappears, and absorbing any vibrations caused by irregular or rough ground.

The design of the invention therefore maintains the advantages of airless or mixed type wheels, relative to lower deformation on bends, better performance in the event of road surface water, greater puncture resistance against sharp objects on the ground, and a longer working life of the wheel. Furthermore, it allows adequate absorption of vibrations at high speeds, while preventing loss of outer contour roundness and eliminating vertical roll and rebound effect found in mixed wheel designs in the state of the art.

As mentioned above, deformation of the circular contour of the wheel during rolling is also reduced, leading to a reduction in resistance to rotation and, in consequence, lower fuel consumption compared to the mixed wheels disclosed hitherto.

The different wheel designs of the invention may be applied to different types of vehicles depending on their nature, distinguishing between vehicles in which the plane of symmetry of the wheel may vary its angle of inclination with respect to the horizontal of the ground on bends (bicycles, motorcycles, mopeds and some three-wheel vehicles), and vehicles of three, four or more wheels, in which the plane of symmetry of the wheel usually remains vertical and perpendicular to the horizontal of the ground. The section describing the preferred embodiment details additional design aspects to maintain the roundness of the wheels on bends for the first vehicle type.

**Description of the Drawings**

The figures below show a diagram indicating how the wheel of the invention works, as well as various operation modes.

Figure 1A illustrates a transverse section of a car wheel, mounted on a rim with pairs of radial elements following a direction close to the radius, cutting according to a plane containing the axis of rotation.

Figure 1B illustrates an external view of the wheel of Figure 1A according to the direction of the axis of rotation, on the face exterior to the side of the vehicle.

Figure 2A illustrates a transverse section similar to that of Figure 1A, also indicating the median cutting plane that defines figure 2B.

Figure 2B illustrates a transverse section of the wheel of Figures 1A, 1B and 2A, cutting according to the median plane defined in Figure 2A, with this cutting plane being perpendicular to the axis of rotation.

Figure 3 illustrates an enlarged transverse section according to a plane containing the axis of rotation of a vehicle with 3 or more wheels, mounted on a rim and containing a chamber with a gas or liquid under pressure.

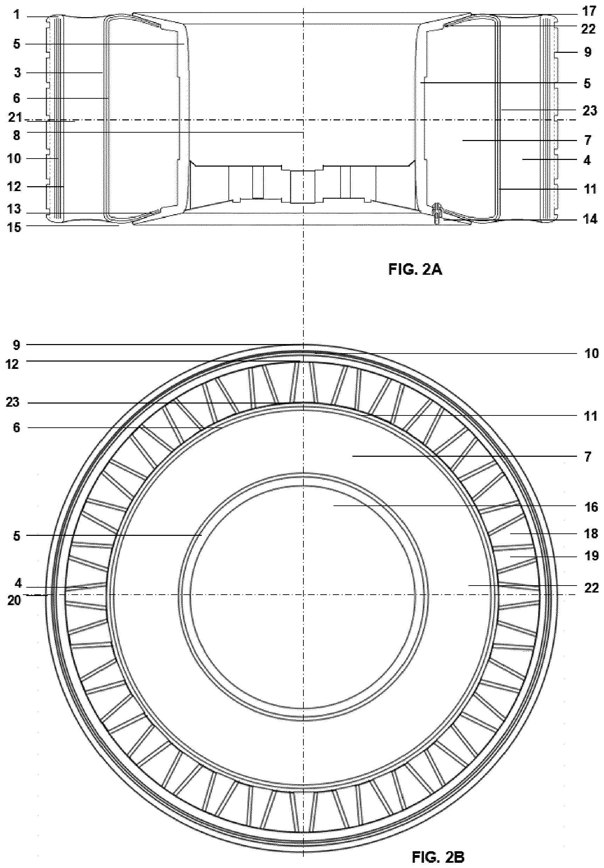

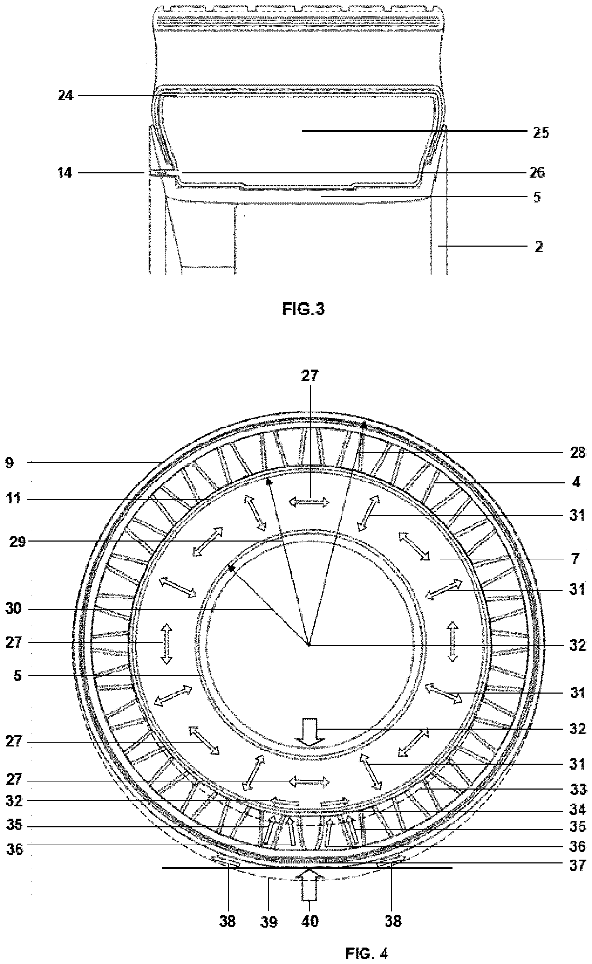

Figure 4 illustrates a sectional view similar to Figure 2B, observing a wheel with radial elements with transverse buckling elasticity, which is deformed by the action of the weights of the wheel and the body of the vehicle, applied on the axle, and by normal action in the area of contact with the ground, as well as the transmission of the stresses produced by this deformation and the distribution of the pressure variations. This drawing illustrates the loss of cylindrical shape of both the lower outer contour of the wheel and the elastic wall surrounding the sealtight compartment. The stresses are mainly distributed under the central part of the rim.

Figure 5 illustrates an explanatory diagram of stress transmission in a wheel design with radial elements that are much more resistant to deformation than the volume of the sealtight compartment. The deformation caused by the weight of the vehicle and the normal reaction force originating from the surface of the wheel in contact with the ground is limited to a solid angle delimited by the axis of rotation and the edges of the contact area between the wheel and the ground.

Figure 6 illustrates a transverse section similar to that of Figures 1A and 2A, which includes a rigid reinforcement structure attached to the rim in order to increase the effective diameter in the event of breakage of the elastic wall. This figure also illustrates the direction of transmission of the centrifugal force produced during the rotation of the vehicle, and which has its point of application in the contact zone between the axle and the wheel, producing a moment of force with respect to the point of contact with the ground.

Figure 7 illustrates a sectional view of the car wheel with rigid radial elements coinciding with the direction of the radius, according to a plane containing the axis of rotation. In this wheel, the rigid radial elements have a widening in their contact zone with the elastic wall; this widening has a curvature similar to that of this wall, through which there is a series of orifices that are common to both elements. The radial elements are anchored to the elastic wall and to the external annular band using rivets or bolts inserted through these orifices.

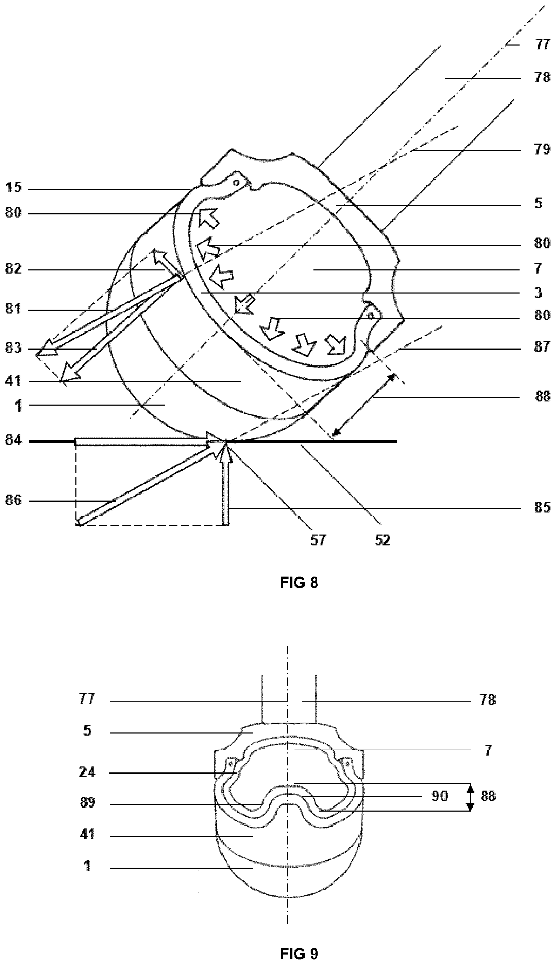

Figure 8 illustrates a partial transverse section of a motorcycle wheel as it travels on a bend, with this wheel having a curved elastic surface in its zone of contact with the rigid radial elements. It shows a sectional view according to the plane that contains the axis of rotation and the point of contact with the ground. Likewise, the forces are also shown if the resultant of the centrifugal force and weight is outside the plane of symmetry of the motorcycle and is directed towards the outside of the curve. Firstly, the components of the resulting force projected in the direction parallel to the axis of rotation and in the direction perpendicular to it are shown. Secondly, the frictional and normal forces of the ground are also shown.

Figure 9 illustrates a partial transverse section of a wheel that has an elastic surface with a concavity and two convexities in its contact zone with the elements of the outer ring. This wheel also has an air chamber.

Figure 10A illustrates a transverse section of a motorcycle wheel, mounted on a rim with rigid radial elements, cutting according to a plane which contains the axis of rotation.

Figure 10B illustrates an external view of the wheel of Figure 10A in accordance with the direction of the axis of rotation, on the face exterior to the side of the motorcycle.

Figure 11 illustrates a transverse section of a bicycle wheel with rigid radial elements, arranged in pairs and following a direction close to the radius. This wheel is mounted on a rim and contains a pressurised gas chamber. The cutting plane is perpendicular to the axis of rotation.

Figure 12 illustrates an enlarged transverse section according to a plane containing the axis of rotation of a bicycle wheel with rigid radial elements. This wheel is mounted on a rim and contains an inner chamber.

The components appearing in the drawings are listed below:

1 - External flexible and substantially inextensible annular band.
2 - Standard wheel rim for pneumatic type wheels, used in the wheel of the invention.
3 - Elastic wall surrounding the sealtight compartment.
4 - Radial element with elastic transverse buckling behaviour, fixed to the external annular band and to the elastic wall surrounding the sealtight compartment.
5 - The wall of the rim closest to the axis of rotation.
6 - Internal face of the elastic wall surrounding the sealtight compartment.
7 - Sealtight compartment.
8 - Direction of the axis of rotation of the wheel.
9 - Outer contact surface of the wheel. Tread pattern.
10 - Structural reinforcement of the external elastic annular band.
11 - Structural reinforcement of the elastic wall surrounding the sealtight compartment.
12 - Internal side of the external elastic annular band.
13 - Side fitting zone of the elastic wall surrounding the sealtight compartment.
14 - Inflation/deflation valve.
15 - External side zone of the elastic wall surrounding the sealtight compartment.
16 - Space between the rim and the axle.
17 - Edge of the rim in the zone furthest from the axis of rotation.
18 - External space between two damping structural elements between the external annular band and the elastic wall surrounding the sealtight compartment.
19 - Internal space between two damping structural elements between the external annular band and the elastic wall surrounding the sealtight compartment.

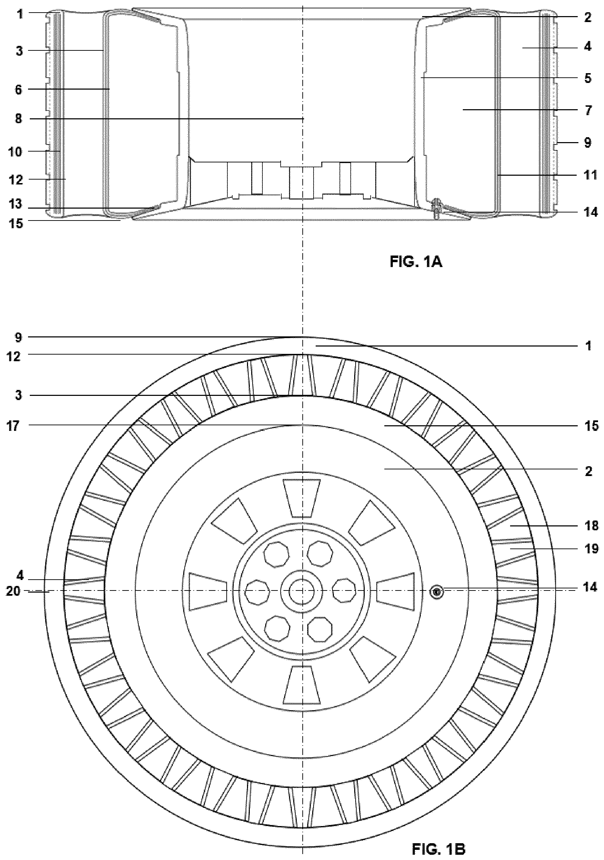

20 - Transverse plane of Figures 1A and 2A.

21 - Transverse plane of Figure 2B.

22 - Side zone of the rim to fit the elastic wall.

23 - External face of the elastic wall surrounding the sealtight compartment.

24 - Air chamber.

25 - Air chamber interior.

26 - Air ingress zone from the valve to the inside of the chamber.

27 - Transmission of the pressure difference produced by the deformation of the wheel in the direction perpendicular to the radius.

28 - Distance from the axis of rotation to the perimeter of the wheel.

29 - Distance from the axis of rotation to the inside of the elastic wall that surrounds the sealtight compartment.

30 - Distance from the axis of rotation to the internal surface of the rim.

31 - Transmission of the pressure difference produced by the deformation of the wheel in the direction of the radius.

32 - Direction of stress produced by the deformation of the wheel transmitted by the perimeter of the elastic wall.

33 - Circumference of the contour of the elastic wall surrounding the sealtight compartment without deformation.

34 - Zone of the elastic wall where the deformation mainly occurs.

35 - Direction of the stress produced by the deformation of the wheel transmitted by the radial element that does not suffer significant deformation.

36 - Direction of the stress produced by the deformation of the wheel transmitted by the radial element that suffers significant elastic deformation.

37 - Contact zone between the wheel and the tread surface.

38 - Direction of the stress produced by the deformation of the wheel transmitted by the outer perimeter of the wheel.

39 - Circumference of the wheel contour without deformation.

40 - Normal reaction force of the rigid surface of the ground.

41 - Rigid radial element.

42 - Solid angle at which deformation of the external annular band and the elastic wall occurs.

43 - Distance between the axle and the inner contour of the rim.

44 - Zone of the elastic wall that is deformed by the action of the stress transmitted through the rigid radial elements between the external annular band and the elastic wall.

45 - Distance between the inner contour of the rim and the point of the deformed elastic wall closest to the axle of the wheel.

46 - Distance between the natural position of the elastic wall and its position of maximum deformation.

47 - Direction of stress transmitted by the rigid radial elements within the solid angle of deformation.

48 - Rigid radial element within the solid angle of deformation, located in the central zone of this solid angle.

49 - Distance between the natural position of the elastic wall and the position of maximum deformation of the external annular band.

50 - External annular band contour without deformation.

51 - Distance between the natural position of the external annular band and its maximum deformation position.

52 - Ground surface.

53 - Outer limit of the deformed zone of the elastic annular band.

54 - Outer limit of the deformed zone of the elastic wall.

55 - Elastic wall zone with concave deformation towards the inside of the sealtight compartment.

56 - Contour of the elastic wall without deforming.

57 - Contact zone between the wheel and the ground.

58 - Distance from the axle to the edge of the rim in the zone furthest from the axle.

59 - Direction of centrifugal force transmission applied on the axle of the wheel.

60 - Direction of stress transmitted to the elastic wall by the radial elements.

61 - Contact zone and point of application of the moment of force.

62 - Direction parallel to the axis of rotation in the elastic wall.

63 - Distance between the internal face of the elastic wall which surrounds the sealtight compartment and the reinforcement structure.

64 - Reinforcement structure inside the sealtight compartment.

65 - Distance from the axis of rotation to the external end of the reinforcement structure.

66 - Rivet for anchoring the external annular band to the rigid radial element.

67 - Anchoring zone of the rigid radial element to the elastic wall, with a curvature similar to that of this wall.

68 - Nut for anchoring the rigid radial element to the elastic wall.

69 - Central zone of the rim around the axle.

70 - Orifice in the rim for the axle of the wheel.

71 - Orifices in the rim for the vehicle anchoring bolts.

72 - Inner anchoring washer to secure the rigid radial element to the elastic wall.

73 - Threaded bolt for anchoring the rigid radial element to the elastic wall.

74 - Widening of the rigid radial element with orifices for attachment to the elastic wall.

75 - Outer anchoring washer to secure the rigid radial element to the elastic wall.

76 - Tread grooves.

77 - Symmetry plane of the motorbike.

78 - Motorcycle spoke.

79 - Direction of the resultant of the centrifugal force and weight when the resultant is not contained in the plane of symmetry of the wheel.

80 - Force on the curved elastic wall due to the effect of pressure in the sealtight compartment.

81 - Resultant of the centrifugal force and weight when the resultant is not contained in the plane of symmetry of the wheel.

82 - Component of the resultant of the centrifugal force and weight, directed perpendicular to the plane of symmetry of the wheel.

83 - Component of the resultant of the centrifugal force and weight, directed parallel to the plane of symmetry of the wheel.

84 - Frictional force which opposes centrifugal force.

85 - Normal force opposing the weight exerted by the ground on the wheel.

86 - Resultant of friction force and normal force.

87 - Direction of the resultant of friction force and normal force.

88 - Zone of the elastic wall on which a force is exerted parallel to the axis of rotation due to the pressure in the sealtight compartment.

89 - Convexity in the sealtight compartment.

90 - Concavity in the sealtight compartment.

91 - Bicycle spoke.

92 - Bicycle rim.

93 - Contact zone of the elastic wall with the side of the bicycle rim.

94 - Side of bicycle rim.

**Description of a Preferred Embodiment**

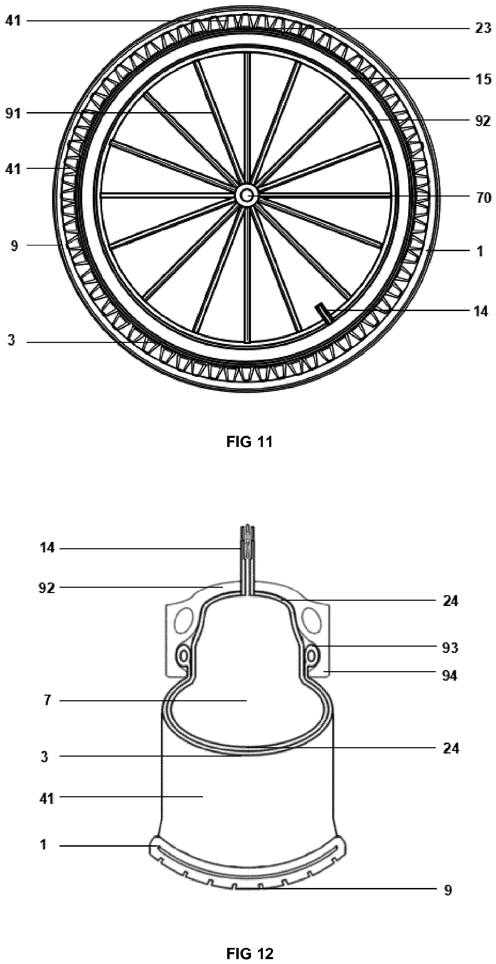

Figures 1A, 1B, 2A, 2B, 3, 4, 5, 6, and 7 show different ways of implementing the invention for a car wheel. Figures 8, 9, 10A, and 10B show embodiments for a motorcycle wheel. Figures 11 and 12 show embodiments of the wheel of the invention for a bicycle.

All these embodiments use a standard rim (2) for pneumatic wheels and a Schrader valve (14), allowing them to be used instead of pneumatic wheels with the same rim dimensions. The designs can also be modified to use another type of valve or rim.

This wheel has an external annular band (1), located at the part furthest from the axis of rotation (8). This external annular band has a tread on the outside (9) and a flexible and substantially inextensible metal mesh (10) on the inside for structural reinforcement, the inside face of which (12) is covered with elastomer material.

In the embodiments shown in Figures 1A, 1B, 2A, 2B and 4, this external annular band is, in turn, connected to a series of metallic radial elements (4), which have elastic characteristics given their capacity to move transversely in their central part due to buckling under stable equilibrium condition.

These damping structural elements are in contact with an elastic wall (3) surrounding the volume (7) which contains a gas or liquid at a pressure higher than atmospheric pressure. This elastic wall is formed by a surface (6) made of elastomer material, which gives it a flexible, substantially inextensible character and also the rigidity necessary to fit into the sides of the rim (2).

The wheel in figure 4 illustrates a design that seeks to eliminate only the resonance phenomena and phase differences between nearby radial elements. The operating pressure of the sealtight compartment is selected in combination with the thickness of the metallic radial elements. Choosing a suitable pressure and thickness of the radial elements therefore ensures the wheel deformation caused by the weight of the vehicle is distributed proportionally between the airless structure and the walls of the pressurised compartment. To this end, the aim is for the quotient between the variation of the outer radius of the wheel and this unchanged external radius (28) to be similar to the quotient resulting from dividing the variation of the radius of the elastic wall by the value of this unchanged radius (29). These quotients are considered similar if the variation between them is less than 20%.

As described above, this embodiment has limitations in terms of the maximum speed at which this wheel can be used, since there is only partial improvement in the roundness of its outer contour and the contour of the elastic wall in zones far from the zone of contact with the ground. Furthermore, vertical oscillation, rebound effect and vibration phase difference phenomena appear between the aforementioned pneumatic and airless parts.

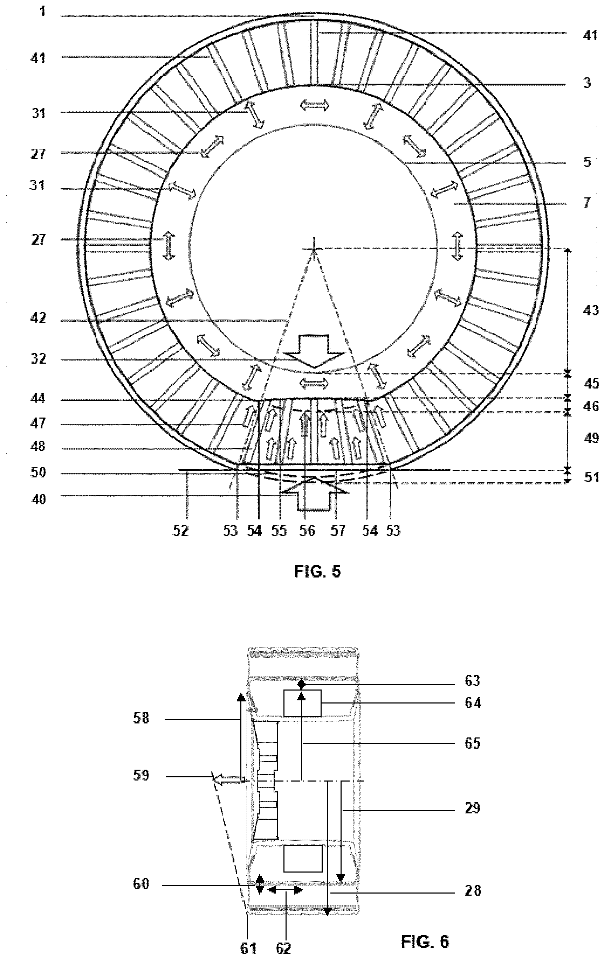

The wheel in Figure 5 was developed to avoid these problems, with this wheel having radial elements with much greater resistance to deformation than the volume of the sealtight compartment. This wheel has rigid radial elements separated by 9° angles, up to a total of 40 elements. Each solid angle of deformation for this wheel (38°) includes between 4 or 5 radial rigid elements, depending on the rotation position of the wheel. The deformation produced by the weight of the vehicle and the action of the normal reaction force originating in the surface of contact of the wheel with the ground is transmitted through the rigid radial elements. The deformations in the external annular band are located within a solid angle delimited by the axis of rotation and the edges of the contact zone between the wheel and the ground. In the case of the elastic wall surrounding the sealtight compartment, the deformation occurs within this same solid angle of deformation, and the angle of deformation may extend slightly to the zone of contact of the next radial element with the elastic wall (typically less than 10°).

The constituent materials are chosen so that the maximum deformation resistance per unit of area in the radial direction of the external annular band, and the maximum deformation resistance per unit of area in the radial direction of the elastic wall, are lower than the pressure inside the sealtight compartment.

Figure 6 illustrates a wheel such as those in figures 1A and 2A, in which a reinforcement structure (64) has been included within the sealtight volume in order to improve structural behaviour in the event of a puncture. A rim usually requires a minimum width between its side bands in order to fit a tyre, or, as in the innovation, an elastic wall surrounding the compartment. In some cases, this space between the sides of the rim can be a problem in the event of a sudden loss of pressure, since the radial elements can occupy the space between both sides, reducing the effective diameter of the wheel. To avoid this circumstance, it is possible to fix to the rim a reinforcing structure with a circular surface with a radius (65) greater than the maximum radius of the rim (58) and smaller than the minimum radius of the elastic wall (29). This reinforcement structure can be made of a rigid or elastic material, fixed to the central part of the rim or to the inside of its sidewalls, and helps maintain the effective diameter of the wheel in the event of loss of pressure in the internal volume, which is reduced by a distance (63) that ensures vehicle circulation is maintained.

All these embodiments involve some difficulty in joining the radial elements to the external annular band and the elastic wall, especially if the radial elements are not made of elastomer material. Given the different nature of the materials constituting the radial elements and the elastic wall (usually made of vulcanised elastomer), these two components cannot be joined exclusively by adhesive substances, since it is verified that the nature of such a joint is not capable of withstanding the transverse strains generated by the joint action of the rotation of the axle and the frictional force generated on the tread by the surface in contact with the ground.

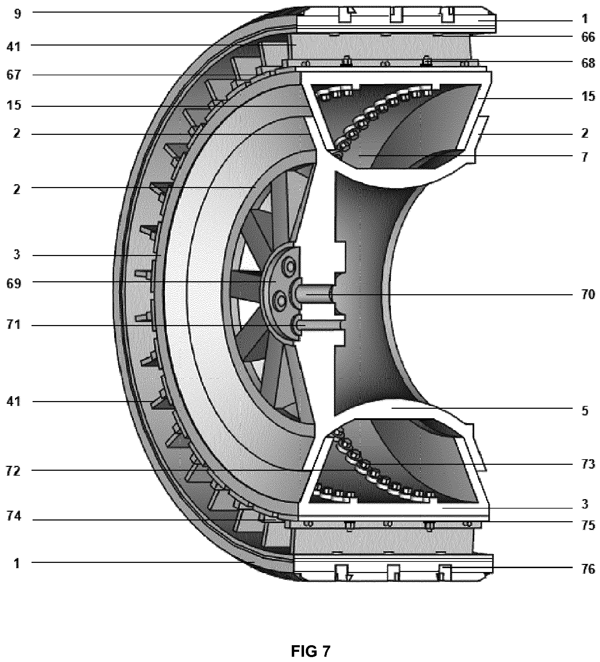

In order to achieve an effective joint, as shown in the sectional view of the car wheel in Figure 7, the rigid radial elements have a widening in their contact zone with the elastic wall that has a curvature similar to the curvature of this wall, crossed by orifices which are common to both of them. The radial elements are anchored to the elastic wall and to the external annular band using rivets or bolts (68, 73) inserted through these orifices. Elastomer washers (72, 75) with an inner diameter slightly smaller than that of the rivet or bolt are also used to ensure sealtight integrity, and a sealant is added to them to ensure these orifices are sealtight on both sides. This also facilitates the wheel manufacture process.

Furthermore, the use of radial elements with widening in their zone of contact with the elastic wall prevents torsional effects on these elements and helps ensure stresses are transmitted in the direction of the radius.

In the case of two-wheeled vehicles, and some three-wheeled ones, the inclination that occurs on bends to counteract the effect of centrifugal force means the development of a special profile in the geometry of the elastic wall is required in order to increase resistance to lateral displacement of the radial elements with respect to this wall. This phenomenon is relevant in situations where the symmetrical plane of the wheel has a significant degree of inclination with respect to the horizontal.

Figure 8 illustrates the distribution of stresses on a mixed motorcycle wheel in the case of a preferred embodiment which includes a curvature in the contact zone between the elastic wall and the radial elements.

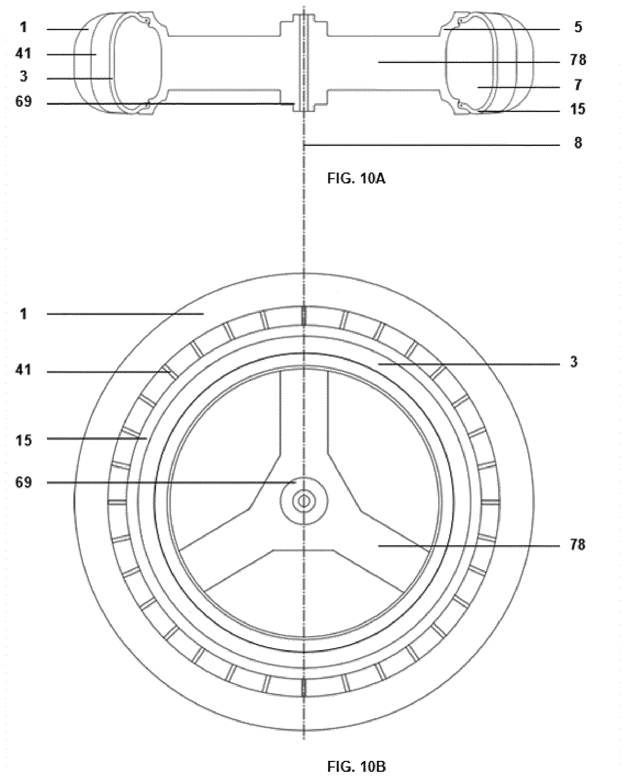

This preferred embodiment, as shown in Figures 8, 10A and 10B, has external dimensions similar to those of a traditional pneumatic wheel, and is mounted on a standard-size rim. This wheel has an elastomer tread with a curved outer contour, allowing grip to be maintained when the vehicle is tilting on a bend. The outer geometry of this cover allows grip to be maintained up to a maximum angle of inclination of 60° with respect to the vertical plane, with an inclination of 45° shown in figure 9. This annular band (1) surrounded by the tread is attached to rigid radial elements (41) made of light metal such as aluminium. These radially rigid elements are connected to the elastic wall (80) surrounding the closed sealtight volume (7) in the part closest to the axis of rotation. Since this wall has a curvature, the joints between the radial elements and the elastic wall, which are on the same plane as the axis of rotation, are at different distances from this axis in the side zones, increasing the component of the area parallel to the plane of symmetry. This geometry can also be described by indicating that the line which is tangent at these points to the curve contained in this plane forms an angle that is not 90° with the plane of symmetry of the wheel (77). The existence of a component of the area (88) in the contact zone which is parallel to the plane of symmetry means that when strain is generated perpendicular (82) to this plane, the pressure of the sealtight volume applied on this area of the elastic wall generates an opposing force that prevents any transverse displacement of the radial elements.

Figure 9 illustrates an alternative version for motorcycles, based on an air chamber with a curvature in the contact zone that includes more than one concavity.

In the case of the embodiment shown in figure 9, the existence of several cavities, each of which has a component of the area (88) projected on the plane of symmetry, increases the force opposing lateral displacement. Since pressure is independent of this geometry, an increase in the total area is associated with a proportional increase of the force produced. In this case, an additional force appears for each cavity incorporated. The number of cavities may be much higher than the two cavities included in this example. These changes of curvature with variations from concavity to convexity can be defined mathematically by changes in the sign of the second derivative of the contact curve in the plane containing the axis of rotation.

Figures 11 and 12 show an embodiment of the invention for a bicycle wheel that incorporates an inner pressurised chamber. This design uses a standard rim for bicycle wheels with chamber. The chambers used have a transverse diameter smaller than that of a pneumatic type wheel. In this regard, the non-sealtight closed compartment surrounded by the elastic wall has a considerably smaller volume than the one intended for the air chamber in a pneumatic wheel with the same rim dimension. In this embodiment, the structural damping elements have been chosen in directions close to the radius of the wheel.

By modifying their dimensions and pressure requirements, these embodiments of the design of the wheel of the invention can also be adapted for use in other types of vehicles such as aircraft, helicopters, specialised machinery, street cleaners, specialised vehicles, trailers, auxiliary vehicles, etc.

## Claims

1.    A wheel for a vehicle, having:

> a) an outer annular band of flexible nature, substantially inextensible, with a tread on its outer surface;
> b) a rim for attachment of the wheel to the vehicle, enabling its circular movement;
> c) an elastic wall which is in contact with the sidewalls of the rim;
> d) a volume surrounded by the elastic wall and by the rim, forming a closed compartment designed to contain a gas or liquid at a pressure higher than atmospheric pressure;
>
> **characterised in that:**
>
> e) the outer annular band is separate from the elastic wall, this elastic wall occupying a zone in the wheel located closer to the axis of rotation;
> f) the outer annular band is connected, by its portion closest to the axis of the wheel, to a set of radial elements;
> g) these radial elements are connected, by their other end, to the elastic wall, in the zone of this wall furthest away from the axis of rotation;
> h) the elastic wall maintains its contact with the rim as the interior of the closed volume is subjected to a pressure greater than atmospheric pressure;
> i) the radial elements do not occupy the entire volume located between the outer annular band and the elastic wall, so that these elements can move in certain directions occupying a portion of this free volume;
> j) the solid angle of deformation, defined by two planes containing the axis of rotation of the wheel and the boundary points of the contact zone of the tread with the ground, contains two or more radial elements inside it;
> k) the displacement of the ends of the radial elements in contact with the outer annular band, due to the deformation of the wheel from the weight of the vehicle, occurs solely inside a solid angle with the same plane of symmetry as the solid angle of deformation, which is 10° greater than the latter for each of its two sides;
l) the displacement of the ends of the radial elements in contact with the elastic wall, due to the deformation of the wheel from the weight of the vehicle, occurs solely inside a solid angle with the same plane of symmetry as the solid angle of deformation, and which is 10° greater than the latter for each of its two sides.

2.    The wheel for a vehicle according to claim 1, **wherein** the radial elements are of semirigid nature and have a strength limit to an elastic or buckling deformation, in which the product of the maximum permissible pressure without deformation in the direction of its axis multiplied by the area of least transverse section of the radial element is greater than the product of the operating pressure of the closed compartment multiplied by the entire contact area between the elastic wall and this radial element.

3.    The wheel for a vehicle according to claim 1, **wherein** the radial elements are of a rigid, inextensible, non-elastic and nonflexible nature.

4.    The wheel for a vehicle according to claim 1, **wherein** the deformation of the outer annular band due to the weight of the vehicle occurs solely within the solid angle of deformation, the rest of the annular band keeping its circular shape.

5.    The wheel for a vehicle according to claim 1, **wherein** the deformation of the elastic wall due to the weight of the vehicle occurs solely within a solid angle with the same plane of symmetry as the solid angle of deformation, and which is greater than same by 10° for each of its sidewalls, the rest of the contour of the elastic wall keeping its circular shape.

6.    The wheel for a vehicle according to claim 1, **wherein** in each solid angle greater than 9°, the number of radial elements connected to the outer annular band is greater than one.

7.    The wheel for a vehicle according to claim 1, **wherein** the radial elements are disposed toward the axis of rotation with a direction making an angle of less than 10° with the radius, measured in a plane perpendicular to the axis.

8.    The wheel for a vehicle according to claim 1, **wherein** the radial elements, in their zone of contact with the elastic wall surrounding the closed compartment, have a transverse section greater than the central transverse section of the body of the radial element.

9. The wheel for a vehicle according to claim 1, **wherein** the radial elements, in their zone of contact with the outer annular band have a transverse section greater than the central transverse section of the body of the radial element.

10. The wheel for a vehicle according to claim 1, **wherein** the radial elements, in their zone of contact with the elastic wall surrounding the closed compartment, have orifices which are common with this elastic wall, and through which pass anchoring elements, such as screws or rods.

11. The wheel for a vehicle according to claim 1, **wherein** inside the closed volume there is a solid structure whose surface furthest away from the axis of rotation is concentric with same, this structure being anchored to the rim.

12. The wheel for a vehicle according to claim 1, **wherein** the closed volume formed by the rim and the elastic wall is adapted to contain an air chamber, a chamber for another gas, or a chamber to contain liquid, at a pressure greater than atmospheric pressure.

13. The wheel for a vehicle according to claim 12, **wherein** the diameter of the air chamber, the chamber with another gas, or the chamber to contain a liquid has a transverse tube diameter less than that of a chamber for a wheel of exclusively pneumatic type with similar rim dimensions.

14. The wheel for a two-wheeled vehicle according to claim 1, **wherein** the quotient obtained by dividing the variation of the outer radius of the wheel by that outer radius without modification differs by less than 20% from the quotient obtained by dividing the variation of the radius of the elastic wall by the value of that radius without modification.

15. The wheel for a vehicle according to claim 1, **wherein** the zone of contact between the radial elements and the elastic wall, at its intersection with a plane containing the axis of rotation, forms a curve whose tangent at certain points of same forms an angle other than 90° with respect to the plane of symmetry of the wheel.

16. The wheel for a two-wheeled vehicle according to claim 15, **wherein** the zone of contact between the radial elements and the elastic wall, at its intersection with a plane containing the axis of rotation, forms a curve whose second derivative changes sign in at least two points.

FIG. 1A

FIG. 1B

1
5
3
6
21
8
10
12
13
15

17
22
9
5
23
7
4
11
14

**FIG. 2A**

9
12
23
6

5

4
20

10

11

7

16
18
19
22

**FIG. 2B**

EP 3 482 972 A1

**FIG.3**

**FIG. 4**

**FIG. 5**

**FIG. 6**

**FIG 7**

**FIG 8**

**FIG 9**

1
41
3
69

5
78
7
15
8

FIG. 10A

1

41

15

69

3

78

FIG. 10B

FIG 11

FIG 12

<table>
<tr><td colspan="2"><strong>INTERNATIONAL SEARCH REPORT</strong></td><td>International application No.<br>PCT/ES2017/000083</td></tr>
</table>

A. CLASSIFICATION OF SUBJECT MATTER

**See extra sheet**

According to International Patent Classification (IPC) or to both national classification and IPC

B. FIELDS SEARCHED

Minimum documentation searched (classification system followed by classification symbols)
**B60B, B60C**

Documentation searched other than minimum documentation to the extent that such documents are included in the fields searched

Electronic data base consulted during the international search (name of data base and, where practicable, search terms used)

**EPODOC, INVENES**

C. DOCUMENTS CONSIDERED TO BE RELEVANT

| Category* | Citation of document, with indication, where appropriate, of the relevant passages | Relevant to claim No. |
|---|---|---|
| A | WO 2005007422 A1 (MICHELIN SOC TECH et al.) 27/01/2005, abstract; paragraphs [041]-[051],[056],[060]-[082]; figures 1-3,6,7,10,11 | 1,2,4,6 |
| A | WO 2014201368 A1 (THOMPSON, R.) 18/12/2014, abstract; paragraphs [0049],[0050],[0054],[0056]-[0066]; figures 1,2,10,12,13 | 1,2,4,6 |
| A | US 2010132858 A1 (ARAKAWA et al.) 03/06/2010, abstract; paragraphs [0032]-[0093]; figures 2,4,5,7 | 1,2,6,7 |
| A | EP 2418099 A2 (THE BOEING CO) 15/02/2012, paragraphs [0016]-[0018]; figures 1-3 | 1,2,6,12 |
| A | US 2009211674 A1 (HANADA et al.) 27/08/2009, paragraphs [0023]-[0025],[0040]; figure 1 | 1,2,6 |

☐ Further documents are listed in the continuation of Box C.  ☒ See patent family annex.

| | |
|---|---|
| * Special categories of cited documents:<br>"A" document defining the general state of the art which is not considered to be of particular relevance.<br>"E" earlier document but published on or after the international filing date<br>"L" document which may throw doubts on priority claim(s) or which is cited to establish the publication date of another citation or other special reason (as specified)<br>"O" document referring to an oral disclosure use, exhibition, or other means.<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other documents , such combination being obvious to a person skilled in the art<br>"&" document member of the same patent family |
| Date of the actual completion of the international search<br>08/11/2017 | Date of mailing of the international search report<br>**(13/11/2017)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>F. García Sanz<br><br>Telephone No. 91 3495351 |

Form PCT/ISA/210 (second sheet) (January 2015)

| INTERNATIONAL SEARCH REPORT | | International application No. | |
|---|---|---|---|
| Information on patent family members | | PCT/ES2017/000083 | |

| Patent document cited in the search report | Publication date | Patent family member(s) | Publication date |
|---|---|---|---|
| WO 2005007422 A1 | 27.01.2005 | JP2007534531 A | 29.11.2007 |
| | | JP4914211B B2 | 11.04.2012 |
| | | TW200508055 A | 01.03.2005 |
| | | TWI339165B B | 21.03.2011 |
| | | US2004012246 A1 | 22.01.2004 |
| | | US7013939 B2 | 21.03.2006 |
| | | RU2006104561 A | 27.06.2006 |
| | | RU2347684 C2 | 27.02.2009 |
| | | MXPA06000268 A | 30.03.2006 |
| | | KR20060033906 A | 20.04.2006 |
| | | KR101059722B B1 | 26.08.2011 |
| | | EP1660335 A1 | 31.05.2006 |
| | | CN1822962 A | 23.08.2006 |
| | | CN100486822C C | 13.05.2009 |
| | | CA2532099 A1 | 27.01.2005 |
| | | CA2532099 C | 30.08.2011 |
| | | BRPI0412650 A | 26.09.2006 |
| | | BRPI0412650 B1 | 04.08.2015 |
| | | AU2004257266 A1 | 27.01.2005 |
| | | AU2004257266B B2 | 18.02.2010 |
| WO 2014201368 A1 | 18.12.2014 | CA2915483 A1 | 18.12.2014 |
| | | EP3007909 A1 | 20.04.2016 |
| | | EP3007909 A4 | 01.03.2017 |
| | | US2014367007 A1 | 18.12.2014 |
| | | US9751270 B2 | 05.09.2017 |
| US 2010132858 A1 | 03.06.2010 | JP2010126070 A | 10.06.2010 |
| | | JP5221306B B2 | 26.06.2013 |
| | | US8113253 B2 | 14.02.2012 |
| EP 2418099 A2 | 15.02.2012 | US2014020817 A1 | 23.01.2014 |
| | | US9475244 B2 | 25.10.2016 |
| | | US2012038207 A1 | 16.02.2012 |
| | | US8567461 B2 | 29.10.2013 |
| | | AU2011202186B B1 | 17.11.2011 |
| US 2009211674 A1 | 27.08.2009 | JP2009196603 A | 03.09.2009 |
| | | JP4506853B B2 | 21.07.2010 |
| | | CN101519022 A | 02.09.2009 |
| | | US8276628 B2 | 02.10.2012 |
| | | FR2927844 A1 | 28.08.2009 |

Form PCT/ISA/210 (patent family annex) (January 2015)

**INTERNATIONAL SEARCH REPORT**

International application No.

PCT/ES2017/000083

**CLASSIFICATION OF SUBJECT MATTER**

*B60B9/26* (2006.01)
*B60B1/02* (2006.01)
*B60C7/10* (2006.01)
*B60C7/12* (2006.01)
*B60C7/18* (2006.01)

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120038207 A